# DEMANDE DE BREVET EUROPEEN

(11) **EP 2 676 629 A1**
(43) Date de publication de la demande: **25.12.2013**
(21) Numéro de dépôt: 13305832.1
(22) Date de dépôt: 20.06.2013
(51) Int. Cl.: A61C 7/36, A61C 7/02, A61C 7/28

(54) **Appareillage d'orthodontie ou d'orthopédie dento-faciale amélioré, en particulier pour une propulsion mandibulaire**

(30) Priorité: 21.06.2012 FR 1255860
(71) Demandeur: Lac-Beriere, Arnaud, 57000 Metz (FR)
(72) Inventeur: Lac-Beriere, Arnaud, 57000 Metz (FR)
(74) Mandataire: Poupon, Michel

(57) **Abrégé**

La présente invention concerne un boitier-pivot amovible (5) pour appareillage orthodontique comprenant un pivot (19) configuré pour coopérer avec une attache (13) d'une bielle télescopique (6) de sorte que ladite bielle télescopique (6) puisse être fixée mobile en rotation sur ledit boitier-pivot amovible (5) par l'intermédiaire dudit pivot (19), un corps (17) muni d'une lumière (18) non circulaire configurée pour la mise en place d'un arc orthodontique (3), ladite lumière (18) incorporant les informations de premier, second et troisième ordre, ledit corps (17) présentant une empreinte (20) configurée pour recevoir un outil de maintien (12) de sorte à pouvoir maintenir ledit boitier-pivot amovible (5) pendant une opération de serrage destinée à fixer ladite bielle télescopique (6) sur ledit boitier-pivot amovible (5).

L'invention concerne également un appareillage comprenant un boitier-pivot amovible (5) selon l'invention, et un kit d'outillage pour la détermination et la mise en place d'un appareillage selon l'invention.

## Description

La présente invention concerne les appareillages d'orthodontie ou d'orthopédie dento-faciale, en particulier en vue d'une propulsion mandibulaire et notamment sur appareillage multi-attaches dans les techniques « edgewise » et d' « arc droit ».

Dans le domaine du positionnement des dents et mâchoires, l'orthodontie ou l'orthopédie dento-faciale ont permis la mise au point d'appareillages aptes à corriger la position de dents (orthodontie), ou des mâchoires (orthopédie dento-faciale). Plus particulièrement quand la mâchoire inférieure est positionnée en arrière par rapport à la mâchoire supérieure, de tels appareillages sont conçus pour exercer depuis la mâchoire supérieure un effort vers l'avant sur la mâchoire inférieure. Un tel effort exercé de manière continue pendant une durée déterminée à partir du diagnostic et des objectifs du traitement permet la correction du décalage sagittal maxillo-mandibulaire de façon à permettre la coordination des arcades dentaires maxillaire et mandibulaire. Cela permet donc d'améliorer l'esthétique d'une bouche, ou du moins la conformité avec un standard dans un cadre social donné.

Ces appareillages comprennent dans la technique avec multi attaches un arc orthodontique maxillaire et un arc orthodontique mandibulaire, conçus pour le bon positionnement des dents du maxillaire et de la mandibule sur leur arcade respective et en coordination des deux arcades, et des pivots aptes à être fixés ou glissés sur lesdits arcs orthodontiques et/ou sur les attaches ou bagues collées ou scellées sur les couronnes dentaires, et des bielles télescopiques reliant deux pivots, et aptes à exercer un effort d'écartement continu entre les deux pivots. Pour exercer un effort vers l'avant de la mâchoire inférieure, on fixe du côté droit et du côté gauche un pivot à l'arrière de la mâchoire supérieure, par exemple au niveau d'une molaire supérieure, et un pivot à l'avant de la mâchoire inférieure, par exemple au niveau d'une canine. On fixe une bielle télescopique entre ces deux pivots. Cette bielle télescopique est conçue pour exercer un effort permanent d'écartement des deux pivots, et donc d'avancement de la mâchoire inférieure. Cet effort d'écartement est produit par la réaction des structures anatomiques déformables étirées (par exemple les muscles et les éléments des capsules articulaires) et aura un ensemble d'effets sur les structures articulaires osseuses, alvéolaires et dentaires tels que décrits dans la littérature médicale.

Les moyens mis en oeuvre dans l'état de la technique pour obtenir un appareillage adapté et le mettre en place présentent plusieurs inconvénients, en particulier concernant l'ergonomie et la fiabilité. Après les premières phases de correction des positions dentaires, la mise en place des bielles télescopiques représente une opération délicate. De plus sur les systèmes de bielles télescopiques statiques n'incluant pas de ressort de poussée il est difficile de déterminer la longueur exacte de la bielle télescopique pour un patient, et une fois cette longueur déterminée il faut tronçonner un corps de bielle et une tige de bielle pour obtenir la bonne dimension. Au moment de la fixation de la bielle télescopique sur le pivot, il arrive qu'on brise l'appareillage par le couple de serrage appliqué. Enfin les possibilités de traitement peuvent parfois être limitées par l'obligation de fixer le système de bielles télescopiques fixement sur l'arc orthodontique, interdisant les mécaniques de glissement.

La présente invention a pour but de pallier au moins en partie ces inconvénients. A cet effet elle propose un boitier-pivot amovible pour appareillage orthodontique comprenant un pivot configuré pour coopérer avec une attache d'une bielle télescopique de sorte que ladite bielle télescopique puisse être fixée mobile en rotation sur ledit boitier-pivot amovible par l'intermédiaire dudit pivot, un corps muni d'une lumière non circulaire configurée pour la mise en place d'un arc orthodontique, ladite lumière incorporant les informations de premier, second et troisième ordre. Ce boitier pivot amovible est particulier en ce que ledit corps présente une empreinte configurée pour recevoir un outil de maintien de sorte à pouvoir maintenir ledit boitier-pivot amovible pendant une opération de serrage destinée à fixer ladite bielle télescopique sur ledit boitier-pivot amovible.

Grâce à ces dispositions, la mise en place des bielles télescopiques en cours de traitement devient une opération beaucoup plus simple et rapide, et permet d'éviter des risques de détérioration de l'arc, ou des fixations, ainsi que les risques de desserrage et perte de vis, avec les conséquences sur la qualité du traitement et les risques de blessure en bouche ou par ingestion.

L'invention concerne encore un appareillage orthodontique comprenant des attaches de dent configurées pour coopérer avec un arc orthodontique, et un boitier-pivot amovible selon l'invention, permettant de bénéficier des avantages dudit boitier-pivot amovible, la mise en place des bielles en cours de traitement devenant une opération beaucoup plus simple et rapide.

Selon un autre mode de réalisation, ledit appareillage peut comprendre en outre un boitier-pivot fixe comprenant une base apte à être fixée, par exemple soudée, sur une bague dentaire d'une molaire ou prémolaire maxillaire, un corps muni d'une lumière non circulaire configurée pour la mise en place d'un arc orthodontique, et un pivot, configuré pour coopérer avec une attache de ladite bielle télescopique de sorte que celle-ci puisse être fixée mobile en rotation sur ledit boitier par l'intermédiaire dudit pivot, constituant ainsi un boitier-pivot fixe, permettant ainsi un positionnement facile de l'arrière de la bielle télescopique à un stade ultérieur du traitement.

L'invention concerne également un kit d'outillage pour la détermination et la mise en place d'un appareillage orthodontique selon l'invention. Ce kit est particulier en ce qu'il comprend un boitier pivot amovible selon l'invention, et un corps de bielle gabarit et une tige de bielle gabarit configurés pour la détermination de la longueur d'une bielle télescopique d'un appareillage orthodontique, ladite bielle télescopique étant composée d'un corps de bielle dont l'extrémité arrière comprend une attache de bielle destinée à être fixée sur un boitier-pivot supérieur à l'arrière d'un maxillaire, et d'une tige de bielle munie d'une tige apte à s'introduire dans ledit corps de bielle, et dont l'extrémité avant comprend une attache de bielle apte à être fixée sur un boitier-pivot inférieur à l'avant d'une mandibule correspondante, et en ce que ladite tige de bielle gabarit comporte une graduation millimétrique ; une telle disposition permet de déterminer la longueur des corps de bielle et tige de bielle en une seule opération.

Selon d'autres caractéristiques
- Le kit peut comprendre en outre une pluralité de corps de bielle et/ou de tiges de bielle de longueurs différentes, les longueurs étant incrémentées de millimètre en millimètre entre deux tiges et/ou corps de bielle de longueurs voisines ; ainsi il devient possible d'obtenir une bielle télescopique de longueur parfaitement adaptée par simple sélection d'un corps de bielle, sans nécessité de scier un corps de bielle ; dans l'option où le kit comprend également des tiges de bielle de longueur différente, la sélection devient encore plus facile, mais même avec des tiges de bielle de dimension incrémentées par exemple d'un centimètre, les possibilités de sélection sont déjà intéressantes,
- Le kit peut comprendre en outre un outil de maintien en rotation dudit boitier-pivot amovible, permettant le maintien dudit boitier-pivot par son empreinte.

L'avantage apporté par la présente invention réside principalement en ce qu'il facilite grandement la tâche d'un praticien chargé de mettre en place des bielles télescopiques de propulsion mandibulaires.

La présente invention sera mieux comprise à la lecture de la description détaillée qui suit faite en référence aux figures annexées dans lesquelles
- La figure 1 est une vue d'une mâchoire équipée d'un appareillage de propulsion mandibulaire,
- La figure 2 est une vue d'un corps de bielle
- La figure 3 est une vue d'une tige de bielle
- La figure 4 est une vue d'une tige de bielle gabarit selon l'invention

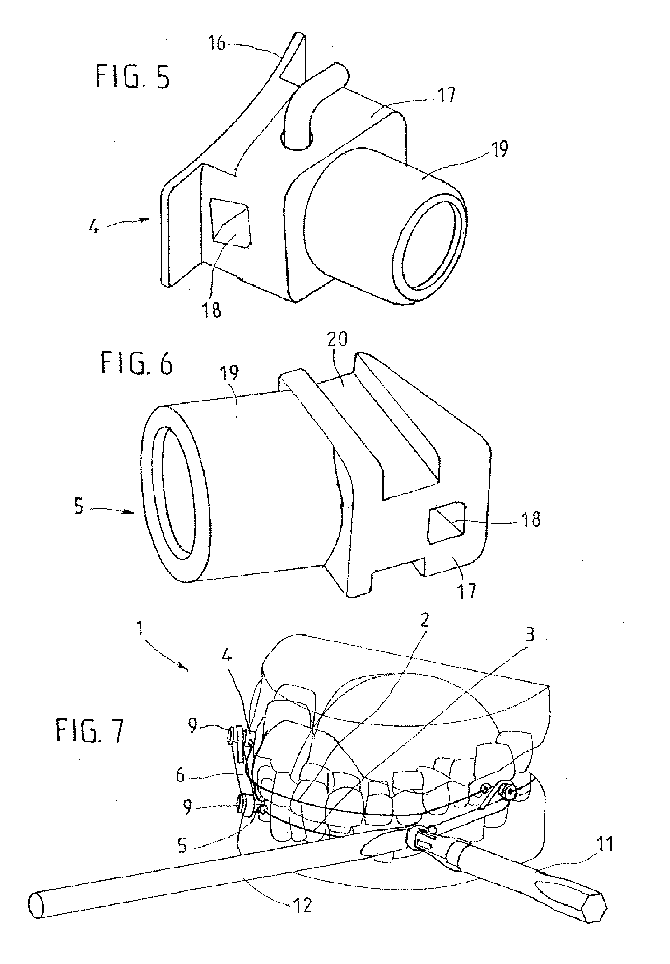

- La figure 5 est une vue d'un boitier-pivot fixe
- La figure 6 est une vue d'un boitier-pivot amovible
- La figure 7 est une vue de la mâchoire de la fig. 1 avec un outil de serrage et un outil de maintien selon l'invention.

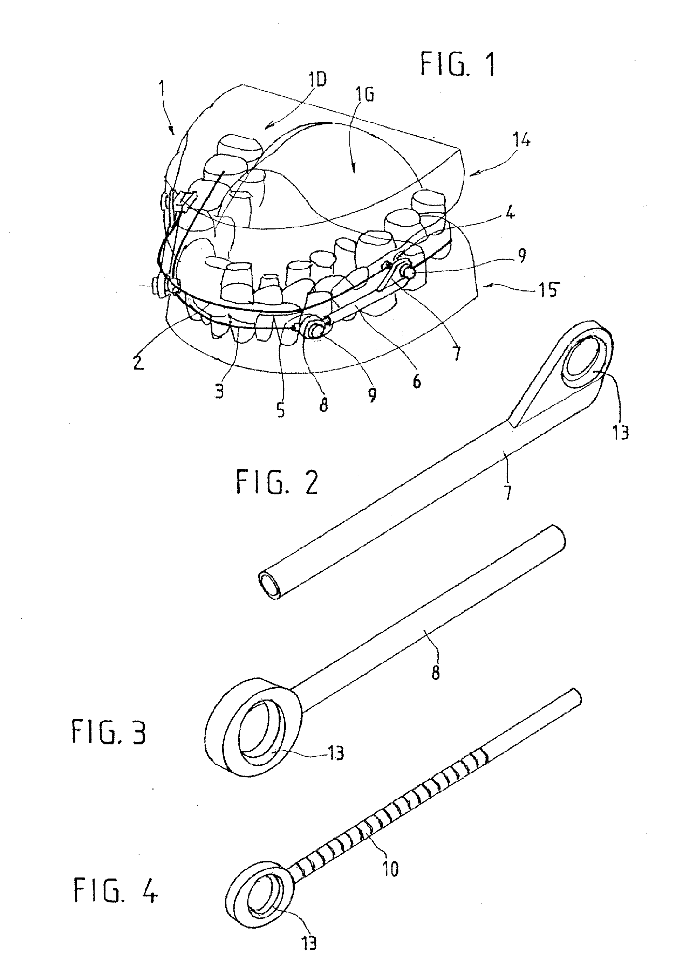

On voit sur la figure 1 une mâchoire 1, avec le côté gauche 1 G et le côté droit 1D, équipée d'un arc orthodontique maxillaire 2 et d'un arc orthodontique mandibulaire 3.

Plusieurs boitiers-pivot 4, 5 sont attachés à ces arcs orthodontiques 2, 3.

En particulier sur la mâchoire gauche 1G un boitier-pivot fixe 4 est fixé à une molaire supérieure à l'arrière du maxillaire 2. Ce boitier-pivot fixe comprend une base 16, un corps 17, dans lequel est pratiqué une lumière 18 rectangulaire, et un pivot 19. La lumière est configurée pour faire passer un arc orthodontique. Cette lumière présente une section de forme rectangulaire pour permettre à un arc de section rectangulaire de transférer des efforts d'inclinaison au boitier-pivot. La lumière présente une taille, une orientation et un positionnement par rapport à sa base permettant de mener le traitement de nivellement puis coordination avec la technique de l'arc droit. Le boitier-pivot fixe se comporte comme un verrou ou boitier (ou bracket en anglais) non convertible et spécifique du système "edgewise" ou d'arc droit utilisé sur les autres dents. En effet différentes valeurs existent selon les systèmes, le système est en général appelé du nom de son inventeur - Ricketts, Alexander ou encore Roth pour ne citer que les plus connus - et les informations de premier/second/troisième ordre attachées à la lumière 18 diffèrent légèrement, mais sont en cohérence des autres dents. La base 16 est destinée à être soudée sur une bague de dent, ce qui le rend fixe, sauf à faire sauter la soudure, ou à démonter la bague de dent.

Un boitier-pivot amovible 5 fixé coulissant à l'avant de l'arc orthodontique mandibulaire 3. Ce boitier-pivot amovible comprend un corps 17, dans lequel est pratiqué une lumière 18 rectangulaire, et un pivot 19. Ce boitier-pivot amovible 5 ne comprend pas de base comme le boitier-pivot fixe 4, car il n'est pas destiné à être fixé à une dent. Il est simplement enfilé dans l'arc orthodontique 2, 3, et retenu entre deux attaches de dents adjacentes. Le corps 17 comprend une empreinte 20, configurée pour recevoir un outil de maintien 12, permettant d'effectuer un bon serrage, comme il sera précisé plus loin.

Une bielle télescopique 6 relie ces deux boitiers-pivot 4, 5, ladite bielle télescopique 6 étant constituée d'un corps de bielle 7, et d'une tige de bielle 8, fixées respectivement sur le boitier-pivot fixe 4 et amovible 5, par l'intermédiaire d'une attache de bielle 13, et par serrage d'une vis 9.

Pour le serrage ou le desserrage des vis 9 pour la fixation des tiges de bielle 8 sur les boitiers-pivot amovibles 5, on peut utiliser un outil de serrage 11 classique. Néanmoins il arrive que lors d'un tel serrage, le couple de rotation appliqué détériore la fixation du boitier-pivot amovible 5 sur l'arc orthodontique 3, ou les attaches de dent adjacentes. Pour éviter ce risque, selon l'invention un outil de maintien 12 permet de maintenir le boitier-pivot amovible 5 pendant le serrage, et ainsi de ne pas solliciter mécaniquement l'arc orthodontique 3 ni les attaches de dent adjacentes. Ceci permet d'effectuer le serrage au bon couple sans se soucier de la tenue de l'appareillage, et permet donc d'éviter que les vis 9 soient mal serrées et nécessitent des visites complémentaires du patient pour d'éventuels resserrages. Cela permet aussi d'éviter que les vis tombent après desserrage et provoquent des blessures, ou soient ingérées. En outre on évite le risque d'effet parasite de traitement par un traitement dissymétrique, au cas où la vis est desserrée d'un côté et pas de l'autre, ainsi que des pertes de temps dans le traitement.

En outre, si le couple de serrage sur le boitier pivot amovible entraine une déformation sans bris de l'arc orthodontique, celle ci sera difficilement repérable, par contre l'ensemble de l'arcade dentaire commencera à se déformer pour finir par adopter la forme de l'arc déformé ; c'est un effet parasite sournois et problématique.

La bielle télescopique 6 exerce un effort d'écartement entre la maxillaire 14 et la mandibule 15, de manière constante, produisant une propulsion de la mandibule 15 vers l'avant, ce qui est l'effet recherché. Les bielles télescopiques 6 resteront en place le temps déterminé par les nécessités du traitement. Selon le diagnostic préalable, il faudra ajouter d'autres traitements, qui ne font pas l'objet de la présente invention.

Ces bielles télescopiques 6 doivent donc avoir une longueur parfaitement ajustée. Pour la détermination de cette longueur, il est proposé selon l'invention de disposer d'une tige de bielle gabarit 10, destinée à être utilisée en remplacement de la tige de bielle 8 au moment de la détermination de cette longueur, avec un corps de bielle gabarit.

Pour la détermination de la longueur de la bielle télescopique 6, on peut procéder de la manière suivante :
- mise en place d'attaches de dent configurées pour recevoir un arc orthodontique 2, 3 selon la méthode de l'arc droit,
- mise en place sur une bague de dent d'un boitier-pivot fixe (4) à l'arrière du maxillaire 2,
- mise en place d'arcs orthodontiques 2 successifs de section circulaire puis rectangulaire maxillaires et d'arcs orthodontiques 3 successifs de section circulaire puis rectangulaires mandibulaires, configurés pour les positionnements corrects des dents les unes par rapport aux autres sur une même mâchoire,
- remplacement desdits arcs orthodontiques par des arcs orthodontiques rigides de forte section rectangulaire, et insertion d'un boitier pivot amovible 5 sur ledit arc orthodontique mandibulaire 3 entre deux attaches de dent,
- placement d'un corps de bielle gabarit sur le boitier-pivot fixe 4,
- placement d'une tige de bielle gabarit 10 sur le boitier-pivot amovible 5,
- assemblage du corps de bielle gabarit à la tige de bielle gabarit 10,
- prise de mesure
- dépose des corps et tige de bielle gabarit
- montage d'une tige de bielle 8 et d'un corps de bielle 7 adaptés sur les boitiers-pivot fixe 4 et amovible 5.

La graduation sur la tige de bielle gabarit 10 permet de déterminer de manière fiable en un seul essai la longueur de bielle télescopique 6 nécessaire. Après démontage, il suffit alors d'adapter la longueur de la tige de bielle 8, et celle du corps de bielle 7, pour obtenir la bonne longueur de bielle télescopique 6.

Selon un mode avantageux de réalisation de l'invention, plutôt que de scier la tige de bielle 8 et/ou le corps de bielle 7, on peut prévoir un kit comprenant une série incrémentée de tiges de bielle 8 et de corps de bielle 7, dont les longueurs sont croissantes d'un millimètre d'une tige de bielle 8 et d'un corps de bielle 7 à l'autre. On peut aussi ne prévoir cette pluralité de longueurs que pour les corps de bielle 7, et prévoir un incrément bien plus important sur les tiges de bielle 8. L'homme du métier n'aura aucune difficulté à réaliser un kit optimal, selon les diverses contraintes et besoins rencontrés par l'orthodontiste, l'important étant de disposer dans ces kits du corps de bielle 7 et de la tige de bielle 8 adaptés pour le patient, ce qui permet d'éviter une ou deux opérations de sciage, toujours consommatrices de temps d'intervention sur un patient.

Pour un traitement orthodontique ou orthopédique dento-facial, le praticien commence par mettre en place des attaches de dent et un premier arc orthodontique 2, 3 de section circulaire, pour produire une correction des diverses dents les unes par rapport à l'autre sur une même mâchoire. Ces arcs orthodontiques sont de section circulaire, et les attaches de dent présentent des lumières rectangulaires, dans lesquels un arc de section circulaire peut coulisser librement. La mémoire de forme de l'arc exerce l'effort nécessaire à la correction individuelle des positions des dents. Les attaches de dents sont configurées pour que la position des dents devienne celle souhaitée lorsque l'arc est droit. Selon l'invention, l'attache de dent de la première ou deuxième molaire maxillaire est un boitier pivot fixe 4. Le pivot 19 est donc en place dès le début du traitement, et ne nécessite aucune manipulation supplémentaire que la mise en place d'une simple attache à la mise en place de l'appareillage.

Après quelques semaines, l'arc peut être remplacé par un arc de section supérieure pour augmenter les efforts par une rigidité plus grande.

On peut ensuite passer à un arc de section rectangulaire, permettant d'ajouter un effort d'inclinaison des dents, pour parfaire la correction.

Lorsque les mâchoires sont prêtes à passer à l'opération de propulsion mandibulaire, il faut alors passer à la mise en place des bielles télescopiques 6.

Le boitier-pivot fixe 4 est déjà en place, le boitier-pivot amovible 5 s'enfile simplement sur le nouvel arc 3, qui est de préférence cette fois un arc de forte section rectangulaire en acier inoxydable, plus rigide que les matériaux à mémoire de forme utilisée pour les premiers arcs du traitement.

Il faut alors déterminer la longueur du corps de bielle 7, qui est la partie de la bielle télescopique 6 exerçant l'effort de poussée sur l'attache de bielle 13 de la tige de bielle 8, ainsi que la longueur de la tige de bielle 8, qui elle, peut dépasser derrière le corps de bielle 7, mais pas trop, pour ne pas provoquer de blessure, et ne doit pas être trop courte, pour ne pas risquer de sortir du corps de bielle 7 lors d'une grande ouverture de la bouche. Les corps et tige de bielle gabarit permettent de déterminer ces longueurs en une seule opération. La présence dans le kit d'un ensemble de corps et tiges de bielle de longueurs incrémentées permet ensuite de disposer immédiatement du corps de bielle 7 et de la tige de bielle 8 adaptés au patient. Les kits sont configurés selon la précision recherchée pour les longueurs ; en général un incrément de millimètre en millimètre pour les corps de bielle 7 est bien adapté. Le même incrément peut s'appliquer aux tiges de bielle 8, même si un incrément plus grossier - de 2, 5 ou 10 mm - pourrait convenir également, permettant une économie sur le kit, la précision étant la plus importante sur le corps de bielle 7. L'homme du métier saura choisir le meilleur incrément pour s'assurer qu'il disposera des pièces adaptées à toutes les situations.

L'avantage apporté par la présente invention réside principalement en ce qu'il facilite grandement la tâche d'un praticien chargé de mettre en place les bielles télescopiques 6, et de déterminer la longueur exacte ou la position d'une bielle télescopique 6.

Bien que l'invention ait été décrite selon un mode de réalisation particulier, elle n'y est nullement limitée, et des variantes peuvent y être apportées, ainsi que des combinaisons des variantes décrites, sans pour autant sortir du cadre de la présente invention. En particulier tout appareillage orthodontique ou d'orthopédie dento-faciale nécessitant la mise en place de bielles télescopiques peut bénéficier de la présente invention, et pas seulement les appareillages de propulsion mandibulaire.

## Revendications

1. Boitier-pivot amovible (5) pour appareillage orthodontique comprenant un pivot (19) configuré pour coopérer avec une attache (13) d'une bielle télescopique (6) de sorte que ladite bielle télescopique (6) puisse être fixée mobile en rotation sur ledit boitier-pivot amovible (5) par l'intermédiaire dudit pivot (19), un corps (17) muni d'une lumière (18) non circulaire configurée pour la mise en place d'un arc orthodontique (3), ladite lumière (18) incorporant les informations de premier, second et troisième ordre, **caractérisé en ce que** ledit corps (17) présente une empreinte (20) configurée pour recevoir un outil de maintien (12) de sorte à pouvoir maintenir ledit boitier-pivot amovible (5) pendant une opération de serrage destinée à fixer ladite bielle télescopique (6) sur ledit boitier-pivot amovible (5).

2. Appareillage orthodontique comprenant des attaches de dent configurées pour coopérer avec un arc orthodontique (2, 3), et un boitier-pivot amovible (5) selon la revendication précédente.

3. Appareillage orthodontique selon la revendication précédente, comprenant en outre un boitier-pivot fixe (4) comprenant une base (16) apte à être fixée, par exemple soudée, sur une bague dentaire d'une molaire ou prémolaire maxillaire, un corps (17) muni d'une lumière (18) non circulaire configurée pour la mise en place d'un arc orthodontique (2), et un pivot (19), configuré pour coopérer avec une attache (13) de ladite bielle télescopique (6) de sorte que celle-ci puisse être fixée mobile en rotation sur ledit boitier (4) par l'intermédiaire dudit pivot (19), constituant ainsi un boitier-pivot fixe (4).

4. Kit d'outillage pour la détermination et la mise en place d'un appareillage orthodontique selon l'une des revendications 2 ou 3, comprenant un boitier pivot amovible (5) selon la revendication 1, un corps de bielle gabarit et une tige de bielle gabarit (10) configurés pour la détermination de la longueur de ladite bielle télescopique (6) d'un appareillage orthodontique, ladite bielle télescopique (6) étant composée d'un corps de bielle (7) dont l'extrémité arrière comprend une attache de bielle (13) destinée à être fixée sur un boitier-pivot supérieur (4) à l'arrière d'un maxillaire (14), et d'une tige de bielle (8) munie d'une tige apte à s'introduire dans ledit corps de bielle (7), et dont l'extrémité avant comprend une attache de bielle (13) apte à être fixée sur ledit boitier-pivot inférieur (5) à l'avant d'une mandibule (15) correspondante, et en ce que ladite tige de bielle gabarit (10) comporte une graduation millimétrique.

5. Kit selon la revendication précédente, comprenant en outre une pluralité de corps de bielle (7) et/ou de tiges de bielle (8) de longueurs différentes, les longueurs étant incrémentées de millimètre en millimètre entre deux tiges et/ou corps de bielle (7) de longueurs voisines.

6. Kit selon l'une des revendications 2 ou 3 comprenant en outre un outil de maintien (12) en rotation dudit boitier-pivot amovible (5).
